(19) Europäisches Patentamt
European Patent Office
Office européen des brevets

(11) **EP 2 824 434 A1**

(12) **EUROPEAN PATENT APPLICATION**

(43) Date of publication:
**14.01.2015   Bulletin 2015/03**

(51) Int Cl.:
***G01J 1/08*** *(2006.01)*         ***F21V 29/00*** *(2015.01)*
***G01R 31/26*** *(2014.01)*

(21) Application number: **13176337.7**

(22) Date of filing: **12.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **APPLIED MATERIALS ITALIA S.R.L.
31048 San Biagio di Callalta (TV) (IT)**

(72) Inventors:
• **Martire, Marco**
  **87030 Longobardi (CS) (IT)**
• **Voltan, Alessandro**
  **35020 Legnaro (PD) (IT)**

(74) Representative: **Zimmermann & Partner
Josephspitalstr. 15
80331 München (DE)**

(54) **System and method for calibrating a light source for simulating a spectrum of solar radiation**

(57)     The disclosure provides a system (10) for calibrating a light source for simulating a spectrum of solar radiation. The system (10) includes: the light source (11) configured to emit radiation (12) including two or more different wavelength ranges to provide an output spectrum; a detection element (61) disposed opposite to the light source (11) and configured to detect the output spectrum, wherein said detection element (61) is a photovoltaic device; an evaluation module (62) connected to the detection element (61) and configured to determine, from the detected output spectrum, an amount of irradiance in one or more of the wavelength ranges; and a light source controller (13) connected to the evaluation module (62) and configured to adjust one or more radiation emission parameters of the light source (11) based on the determined amount of irradiance in the one or more of the wavelength ranges to amend the output spectrum.

Fig. 3

EP 2 824 434 A1

# EP 2 824 434 A1

**Description**

## TECHNICAL FIELD OF THE DISCLOSURE

Embodiments of the present disclosure relate to systems and methods for calibrating a light source for simulating a spectrum of solar radiation. Embodiments of the present disclosure particularly relate to a system and a method for calibrating a light source for simulating a spectrum of solar radiation and testing a photovoltaic device using the simulated spectrum of solar radiation.

## BACKGROUND OF THE DISCLOSURE

Devices capable of generating light that simulates the solar spectrum are commonly known in the production of solar cells. These devices are used to perform inspection and testing of solar cells to check for instance conversion efficiency and to verify operating reliability.

In conventional solar simulators, xenon arc lamps have been widely used. However, xenon type lamps have some drawbacks. For example, the light produced by the xenon arc lamps contains fairly strong intensity peaks in the near infrared region that are not found in any of the standard solar spectra. Accordingly, xenon arc lamps suffer from poor homogeneity of output light distribution and irradiance efficiency, as well as poor spectral accuracy between the spectrum produced by such lamps and the solar spectrum. Accordingly, attempts have been made to use light sources other than xenon arc lamps, such as LEDs.

The industry has developed standards that define solar simulator performance in three performance areas: spectral frequencies match with the solar spectrum, spatial uniformity of irradiance on the surface of the object to be illuminated, and temporal stability of light quantity produced. The IEC 60904-9 standard defines a classification for solar simulators based on said three performance areas. Particularly, the IEC 60904-9 standard defines classes A, B and C, with class A having the best performance. Accordingly, it is desirable to have solar simulators with such class A performance.

In conventional solar simulators, non-uniformity evaluation systems are used to improve performance of said solar simulators, particularly in view of said standard IEC 60904-9.

Apparatuses capable of minimizing fluctuations of a light source and spatially homogenizing the radiation emitted are known. Such an apparatus may include a light-source device for reproducing a spectrum of solar radiation, and sensors disposed opposite to the light-source device to detect the radiation emitted by said light-source device. A control system may then regulate emission parameters of the light-source device to minimize the fluctuations and to spatially homogenize the radiation emitted.

However, controlling an intensity of lamps to achieve spatial uniformity of irradiance might affect the wavelengths produced by said lamps, thereby degrading a simulation accuracy of the solar spectrum.

As an example, when xenon type lamps are used, an intensity of light is adjusted by controlling the electric current and voltage supplied to the xenon type lamps. However, modifying these parameters generally affects all the wavelengths produced by said xenon type lamps. Therefore, it is not possible to accurately simulate and reproduce the solar spectrum for instance in different applications.

Thus, there is a need to improve simulation accuracy and reproducibility of the solar spectrum produced by solar simulators.

## SUMMARY OF THE DISCLOSURE

In light of the above, a system for calibrating a light source for simulating a spectrum of solar radiation according to the independent system claim, and a method for calibrating a light source for simulating a spectrum of solar radiation according to the independent method claim are provided. Further aspects, advantages, and features of the present disclosure are apparent from the dependent claims, the description, and the accompanying drawings.

According to one aspect, a system for calibrating a light source for simulating a spectrum of solar radiation is provided. The system may include: the light source configured to emit radiation including two or more different wavelength ranges to provide an output spectrum; a detection element disposed opposite to the light source and configured to detect the output spectrum, wherein said detection element is a photovoltaic device; an evaluation module connected to the detection element and configured to determine, from the detected output spectrum, an amount of irradiance in one or more of the wavelength ranges; and a light source controller connected to the evaluation module and configured to adjust one or more radiation emission parameters of the light source based on the determined amount of irradiance in the one or more of the wavelength ranges to amend the output spectrum.

According to another aspect, a method for calibrating a light source for simulating a spectrum of solar radiation is provided. The method may include operating the light source to emit radiation including two or more different wavelength

2

ranges, wherein the two or more different wavelength ranges provide an output spectrum; detecting the output spectrum; determining, from the detected output spectrum, an amount of irradiance in one or more of the wavelength ranges; and adjusting one or more radiation emission parameters of the light source based on the determined amount of irradiance in the one or more of the wavelength ranges to amend the output spectrum.

The disclosure is directed to systems for carrying out the disclosed methods and includes system parts for performing each described method step. These method steps may be performed by way of hardware components, a computer programmed by appropriate software, by any combination of the two or in any other manner. Furthermore, the disclosure is also directed to methods by which the described system operates. It includes method steps for carrying out every function of the system.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1    shows an embodiment of a testing system for photovoltaic devices according to the present disclosure;

FIG. 2    shows an exemplary I-V (current vs voltage) curve of a photovoltaic device;

FIG. 3    shows an embodiment of a non-uniformity evaluation system according to the present disclosure;

FIG. 4    shows, by way of example, an external quantum efficiency (EQE) curve, an internal quantum efficiency (IQE) curve, and surface reflectance (SR) of a photovoltaic device;

FIG. 5    shows a system for calibrating a light source for simulating a spectrum of solar radiation according to embodiments described herein; and

FIG. 6    illustrates, by way of example, an irradiance distribution extracted from EQE curves before (a) and after (b) applying the disclosure, in relation to the IEC 60904-9 standard.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

The present disclosure is particularly directed at the calibration of a light source, such as a sunlight simulator, for testing solar cells. According to some embodiments, the present disclosure is directed to calibrating the light source to optimize a spectral match to solar radiation. According to some embodiments, the present disclosure is directed to calibrating the light source to optimize the spectral match and also spatial uniformity of said light source. "Testing" of solar cells in this context shall be understood as irradiating solar cells that shall be tested with a standardized light incidence in order to gain information about the quality and performance of the solar cells. Testing of solar cells is typically done with each solar cell after the production of a solar cell. Testing may thus be one of the final steps in the solar cell production.

"Calibration" of the light source shall be understood in that the emission of the light source is adjusted based on the effect the light source caused on a detection element. The particular effects and how to make adjustments according to the present disclosure will be explained in more detail below. Calibration of a light source as understood herein may be done, for instance, before starting the testing of the solar cells. Furthermore, calibration may be done in selectable time intervals, such as after a selectable time (e.g., after a day or more often) or a selectable number of tested solar cells (e.g., after testing 5,000 solar cells or more).

The present disclosure is particularly based on the idea of evaluating spectral distribution of radiation generated by a light source in one or more selected wavelength ranges, and provides a close loop control to adjust one or more radiation emission parameters of the light source to optimize a spectral match of the radiation generated by the light source with the solar radiation spectrum. Thereby, the light source can be calibrated to optimize the spectral match. According to some embodiments, the light source is calibrated to optimize the spectral match and also a spatial uniformity of the light source.

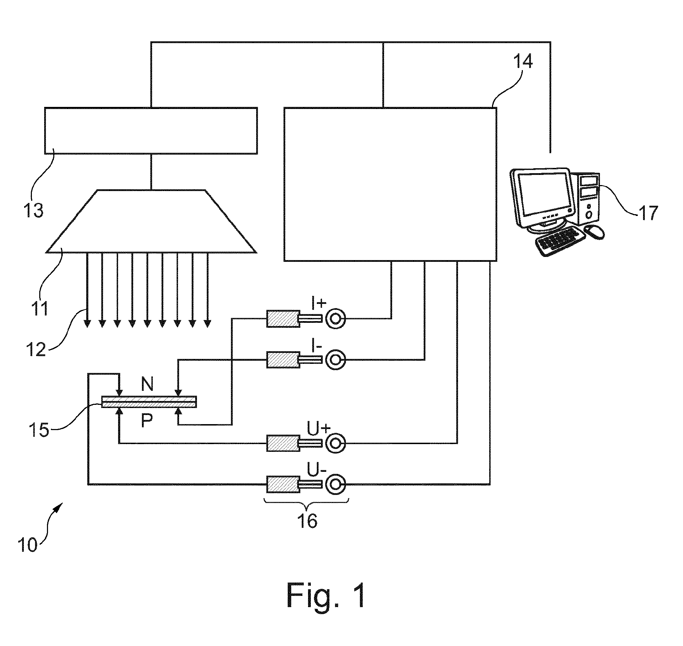

Fig. 1 shows an exemplary embodiment of a testing system 10 that is used to perform tests and inspections on photovoltaic devices 15, e.g., solar cells. According to embodiments, main solar parameters to be tested are open circuit voltage (Voc), short circuit current (Isc), maximum power (Pmax), efficiency, and fill factor. While photovoltaic devices 15 are specifically discussed in the following description, it is understood that the present disclosure is applicable to other systems or devices that require the illumination of a light radiation that simulates the solar spectrum.

The testing system 10 may include a light source 11 such as a solar simulator and a support (not shown) on which the photovoltaic device 15 is placed. The light source 11 may be configured to emit an electromagnetic radiation 12 towards the photovoltaic device 15. In some cases, the light source 11 includes a radiation plate that is divided into a plurality of cells, and each of the cells includes a plurality of light emitting elements, e.g. LEDs, emitting different wavelengths to provide an output spectrum simulating the spectrum of solar radiation. The light source 11 may further include a cooling system to dissipate heat generated for instance by the light emitting elements.

The light source 11 may be disposed at a predetermined distance from the photovoltaic device 15. According to embodiments, the distance between the light source 11 and the photovoltaic device 15 can vary between 50 mm to 800 mm and more, depending on the number of light emitting elements that are used to ensure a spatial uniformity of the radiation emitted over essentially the whole surface of the photovoltaic device 15.

In order to render the output spectrum as homogeneous as possible to enhance the overall irradiance efficiency, one or more optical lenses (not shown) may be optionally provided in an intermediate position between the light source 11 and the photovoltaic device 15 such that the radiation 12 passing through the one or more lenses is homogenized and reaches the entire surface of the photovoltaic device 15 with maximized light distribution performance. The optical lenses may be made of plastic materials, such as acrylic, polymethyl methacrylate (PMMA), polyvinyl chloride (PVC), polycarbonate (PC) or high-density polyethylene (HOPE). The optical lenses may also be made of vitreous materials such as quartz.

A light source controller 14 may be connected to the light source 11. According to embodiments, the light source controller 14 may be configured to control the light source 11, for instance, based on preset conditions or parameters, such as kind of photovoltaic device to be tested, test conditions, etc. The light source controller 14 may be configured to control lamps, e.g. LEDs, of the light source 11 individually or in groups.

According to embodiments, contact elements 16 may provide connections to the photovoltaic device 15. For instance, two pairs of contact elements 16 could be provided, wherein each pair may include a front contact and a back contact for contacting a front surface and a back surface of the photovoltaic device 15, respectively. The first pair may be configured to measure a voltage or voltage drop, and the second pair may be configured to measure a current, so as to enable, for instance, electronic load I-V measurements. The contact elements 16 may establish a connection to measuring device 14.

According to embodiments, a processor device 17 may be connected to the measuring device 14 and may be adapted to evaluate measurement data obtained by said measuring device 14. For instance, the processor device 17 may receive voltage and current data (either analog or digital) from the measuring device and derive the one or more specific parameters of the photovoltaic device 15. The specific parameters may include, but are not limited to, open circuit voltage (Voc), short circuit current (Isc), maximum power (Pmax), efficiency, or fill factor. The processor device 17 may further be configured as a user interface to allow a user to control testing procedures (e.g., measurement setting, test parameters, etc.) and to provide the user with measurement results, e.g., in regard to the above mentioned specific parameters. Although shown as separate entities, it is to be understood that the measuring device 14 and the processor device 17 may be included in one single entity.

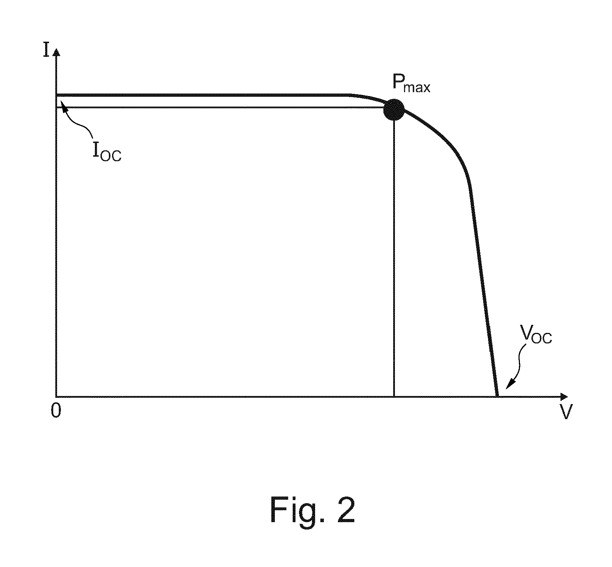

Fig. 2 shows an exemplary I-V (current vs. voltage) curve of a photovoltaic device 15, e.g. a solar cell, taken using the testing system of Fig. 1. The curve could for instance be displayed on a display associated with the processor device 17 described with reference to Fig. 1.

The horizontal axis (x-axis) shows a voltage, and the vertical axis (y-axis) shows a current measured using, for instance, the configuration provided by contact elements 16 shown in Fig. 1. From the measured curve, specific parameters of the photovoltaic device 15 could be extracted. As it is indicated in Fig. 2, an open circuit voltage (Voc), a short circuit current (Isc) and a maximum power (Pmax) can be directly obtained from the measured curve.

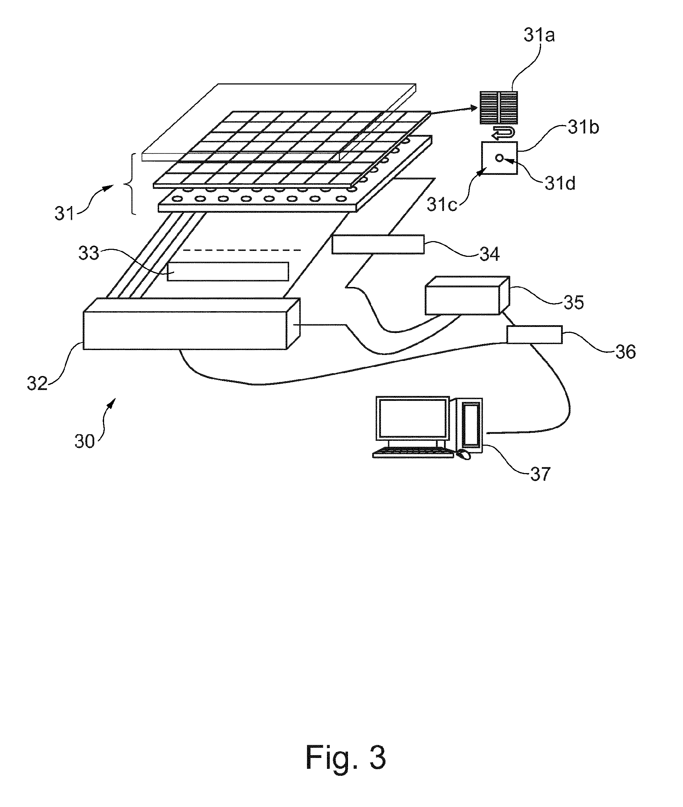

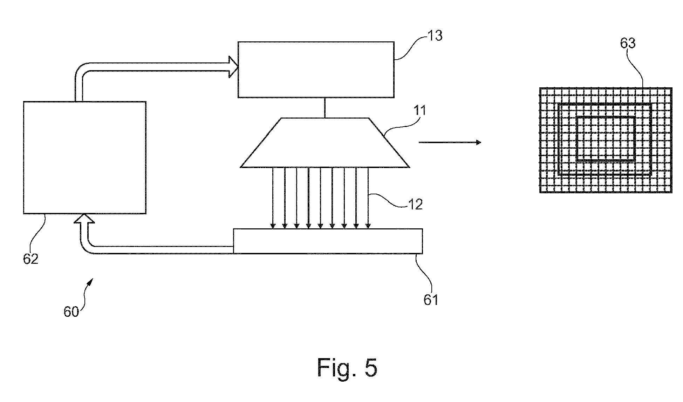

In order to obtain reliable test results, the light source 11 should comply with the above mentioned IEC 60904-9 standard. This standard defines classes, particularly classes A, B and C, wherein specific conditions for light source performance are defined for each class in the above mentioned three different performance areas: spectral frequencies match with the solar spectrum, spatial uniformity of irradiance on the surface of the object to be illuminated, and temporal stability of light quantity produced. Conventional systems for improving the light source performance, for instance of the light source 11 of the above testing system 10, generally address the second performance area, i.e. spatial uniformity of irradiance (see Fig. 3), and the third performance area, i.e. temporal stability of light quantity produced. The system of the present disclosure, as it will be described with reference to Fig. 5, may address the first performance area, i.e. spectral frequencies match to the solar spectrum.

Fig. 3 shows an exemplary embodiment of a non-uniformity evaluation system 30 for evaluating a uniformity of the radiation emitted by the light source 11, as it is for instance shown in Fig. 1. For spatial uniformity, the IEC 60904-9 standard specifies the following.

1. An encapsulated crystalline silicon cell or a mini-module is recommended to be used as a uniformity detector for determining the non-uniformity of irradiance in the test area of the simulator by measuring its short-circuit current. The uniformity detector shall have a spectral response appropriate for the simulator. The linearity and time response of the uniformity detector shall conform to the characteristics of the simulator being measured.

2. Divide the designated test area into at least 64 equally sized (by area) test positions (blocks). The maximum uniformity detector size shall be the minimum of a) the designated test area divided by 64, or b) 400 cm$^2$.

3. The area covered by the detector measurements should be 100 % of the designated test area.

4. The measurement positions should be distributed uniformly over the designated test area.

Referring to Fig. 3, without limitation to the illustration, a non-uniformity evaluation system 30 for evaluating a uniformity of the radiation emitted by the light source 11 may include a reference photovoltaic device 31 having known performance characteristics and are typically placed in shunt condition with a resistor, for instance a precision resistor. The reference photovoltaic device 31 may define a test area to be illuminated and could, for instance, be divided into 64 cells, as it is required by the above explained IEC 60904-9 standard. The reference photovoltaic device 31 may have a front side 31a and a back side 31b. According to embodiments, front contacts 31d and one or more back contacts 31c are provided on the front side 31a and the back side 31b of said reference photovoltaic device 31, respectively. The front contacts 31d, in this example 64 in number (indicated by reference numeral 33), may be connected to an analog multiplexer 32, which in turn may be connected to an amplifier 35. The one or more back contacts 31c could also be connected to said amplifier 35 so as to allow, for example, a measurement and amplification of a voltage difference between each of the front contacts and the one or more back contacts.

According to some embodiments, a processing means 36 is connected to the amplifier 35 and the multiplexer 32. The processing means 36 could be configured to control the analog multiplexer 32. For instance, the processing means 36 may control the analog multiplexer 32 to scan the 64 front contacts 33 (i.e., select at least some of the channels of the multiplexer 32 sequentially) so as to obtain one or more voltage values for each of the front contacts 33 with reference to the back contact 34 while the reference photovoltaic device 31 is illuminated by the light source 11. According to some embodiments, the processing means 36 includes one or more analog/digital converters to convert the analog voltage signals received from the amplifier 35 into digital signals. According to some embodiments, one analog/digital converter could be associated to all channels of the analog multiplexer 32. In this instance, the analog/digital converter may convert signals provided by a currently selected channel of the analog multiplexer 32. According to some embodiments, a processor device 37 is connected to the processing means 36 via an interface, for instance an RS232 connection, and is provided with the digital signals. The processor device 37 may then derive a uniformity map from the obtained voltage values. The uniformity map may show the 64 cells of the reference photovoltaic device 31 being colored so as to indicate an intensity of irradiance at each cell.

According to some embodiments, the processing means 36 is included in the processor device 37.

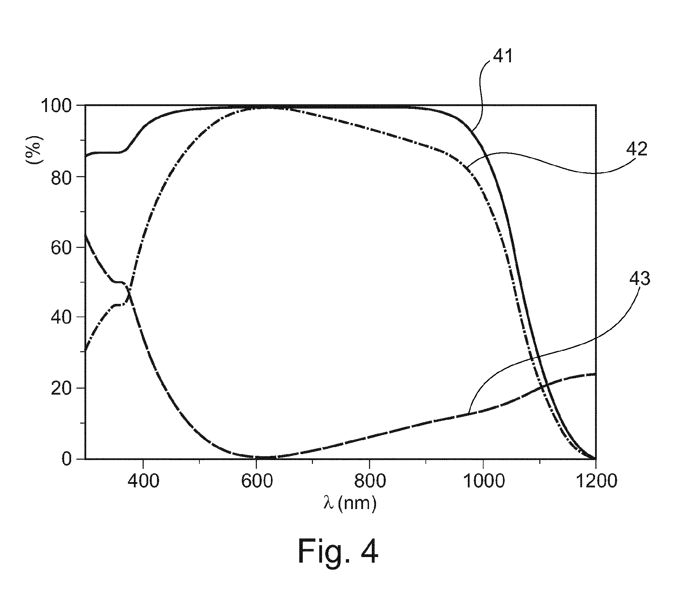

Fig. 4 shows exemplary quantum efficiency and surface reflectance curves of a photovoltaic device, for instance a solar cell.

Each photovoltaic device has specific QE (Quantum Efficiency) curves. QE curves allow to extract an amount of irradiance at each wavelength. A light source to be tested may work with tunable wavelengths so as to allow recording of quantum efficiency and optionally also surface reflectance curves as they are shown in Fig. 4. Shown are examples of Internal Quantum Efficiency (IQE) 41, External Quantum Efficiency (EQE) 42, and Surface Reflectance (SR) 43 as a function of wavelength.

According to embodiments, the present disclosure uses QE, and particularly EQE, to extract an amount of irradiance at each wavelength to evaluate a spectral match of the output spectrum of the light source, for instance with respect to the IEC 60904-9 standard.

Fig. 5 shows a system 60 for calibrating a light source for simulating a spectrum of solar radiation according to embodiments described herein. The light source 11 may emit radiation 12 having different wavelengths so as to simulate solar radiation. Particularly, the light source 11 may be configured to emit radiation 12 including two or more different wavelength ranges to provide an output spectrum simulating the spectrum of solar radiation. According to embodiments, the two or more different wavelength ranges may be selected over the emission spectrum of solar radiation. For instance, the two or more wavelength ranges may be selected from the group including blue, green, yellow, red, infrared, and ultra violet (UV) wavelength ranges.

According to embodiments, the light source 11 may include an array or matrix of light emitting elements, e.g. LEDs, emitting different wavelengths (schematically shown in diagram 63). According to embodiments, the light source 11 may further include a radiation plate divided into a plurality of cells, and each of the cells may include a plurality of the light emitting elements. The matrix may include two or more independent regions that allow to calibrate the spatial uniformity, e.g., using the methodology described with reference to Fig. 3. In Fig. 5 three independent regions are schematically indicated in diagram 63.

The radiation 12 may be emitted towards a detection element 61, which may be disposed opposite to the light source 11 and configured to detect the output spectrum emitted by the light source 11. Said detection element 61 may be one or more photovoltaic devices. In particular, it may be an array of photovoltaic devices. The use of photovoltaic cells is beneficial in that it corresponds to the application of the device for testing solar cells.

The photovoltaic cells as used herein may particularly be MWT (Metal Wrap Through) cells. In a MWT cell not only the back side contacts are printed on the back side of the cell but also the contacts (in particular the busbars) for the n-doped regions of the front side are positioned on the back surface. The collection junctions or fingers, however, may still be positioned on the front side of the solar cell. MWT allow a small shadowing as compared to conventional solar cells.

According to the present disclosure, the one or more photovoltaic devices may be one or more micro cells. The term micro cell shall refer to a photovoltaic cell with dimensions of between 10 x 10 mm and 30 x 30 mm, and optionally a photovoltaic cell with dimensions of 20 x 20 mm.

In order to render the output spectrum as homogeneous as possible to enhance the overall irradiance efficiency, one or more optical lenses (not shown) may be optionally provided in an intermediate position between the light source 11 and the detection element 61 such that the radiation 12 passing through the one or more lenses is homogenized and reaches the entire surface of the detection element with maximized light distribution performance. The optical lenses may be made of plastic materials, such as acrylic, polymethyl methacrylate (PMMA), polyvinyl chloride (PVC), polycarbonate (PC) or high-density polyethylene (HOPE). The optical lenses may also be made of vitreous materials such as quartz.

According to embodiments, the detection element 61 is a photovoltaic device or a solar cell having a specific quantum efficiency (QE), and particularly a specific external quantum efficiency (EQE). The light source 11 may work with tunable wavelengths so that an EQE curve of the detection element 61 could be recorded. This is particularly advantageous, since there is no need to provide a detection element having known characteristics as a reference detection element. Particularly, a photovoltaic device which is to be tested, for instance, according to the methodology described with reference to Fig. 1 or the reference photovoltaic device 31 used for evaluating a uniformity of the radiation emitted by the light source described with reference to Fig. 3, could be used for the purpose of matching the output spectrum to the spectrum of solar radiation according to the present disclosure.

According to embodiments, an evaluation module 62 could be connected to the detection element 61 and configured to determine, from the detected output spectrum, an amount of irradiance in one or more of the wavelength ranges. According to embodiments, the evaluation module 62 may be adapted to extract an amount of irradiance in each wavelength range from the recorded EQE curve. A method for extracting said amount of irradiance is described later.

Based on said amount of irradiance in the one or more of the wavelength ranges, the evaluation module 62 may determine a spectral match of the output spectrum of the light source 11, for instance with the IEC 60904-9 standard, for said one or more of the wavelength ranges. Based on the determined match, the evaluation module 62 may instruct the light source controller 13 to adjust one or more radiation emission parameters of the light source 11 so as to achieve, for instance, an optimal spectral match to solar radiation (close loop control). Particularly, the evaluation module 62 may instruct light source controller 13 to adjust one or more radiation emission parameters associated with one or more of the wavelength ranges emitted by the light source 11. Thereby, the light source 11 can be calibrated.

Radiation emission parameters may include an intensity of individual light emitting elements of the light source. For instance, a driving current of the individual light emitting elements may be altered to change the intensity of emitted light. According to embodiments, adjusting said radiation emission parameters may include activating or de-activating individual light emitting elements of the light source 11.

According to embodiments, the detection element 61 may also have spatial resolution capabilities so as to detect a spatial uniformity of the radiation 12 emitted from the light source 11. In this case, the evaluation module 62 may be further configured to evaluate said spatial uniformity and to instruct light source controller 13 to adjust the one or more radiation emission parameters of the light sources 11 so as to achieve an optimal spatial uniformity. The methods and systems used may be essentially the same as the ones described above with reference to the non-uniformity evaluation system of Fig. 3. For instance, the reference photovoltaic device 31 having a plurality of cells could be used. According to some embodiments, more than one photovoltaic device could be provided in order to implement the spatial resolution capability.

According to embodiments, the system 60 of Fig. 5 could be combined with the non-uniformity evaluation system 30 of Fig. 3 and optionally also with the testing system 10 of Fig. 1. In other words, the system 60 of Fig. 5, the non-uniformity evaluation system 30 of Fig. 3, and the testing system 10 of Fig. 1 could be implemented as one single system. Particularly, all features described above with respect to the non-uniformity evaluation system 30 of Fig. 3 and/or the testing system 10 of Fig. 1 could also be present in the system of Fig. 5 and vice versa. As an example, one single detection element 61, for instance, the reference photovoltaic device 31 of Fig. 3, could be used for both, non-uniformity evaluation and spectral match. Accordingly, spatial uniformity and spectral match could be optimized simultaneously.

In the following, an exemplary method for extracting the amount of irradiance at a certain wavelength from an EQE curve is described.

1. Turn wavelength one by one and measure short circuit current Isc.

2. Extract the total irradiance using the known formula

$$EQE = \frac{J(\lambda)/q}{E(\lambda)/h\nu} \Rightarrow E(\lambda) = \frac{Isc(\lambda)}{A/EQE(\lambda)}\frac{hc}{\lambda q}$$

3. Compare the amount of irradiance for each predefined wavelength range (interval) with the IEC 60904-9 standard for class evaluation.

Based on the comparison result, as explained above, radiation emission parameters of the light source 11 could be adjusted so as to achieve an optimal spectral match to solar radiation to reach class A of IEC 60904-9. Thereby, the light source 11 can be calibrated.

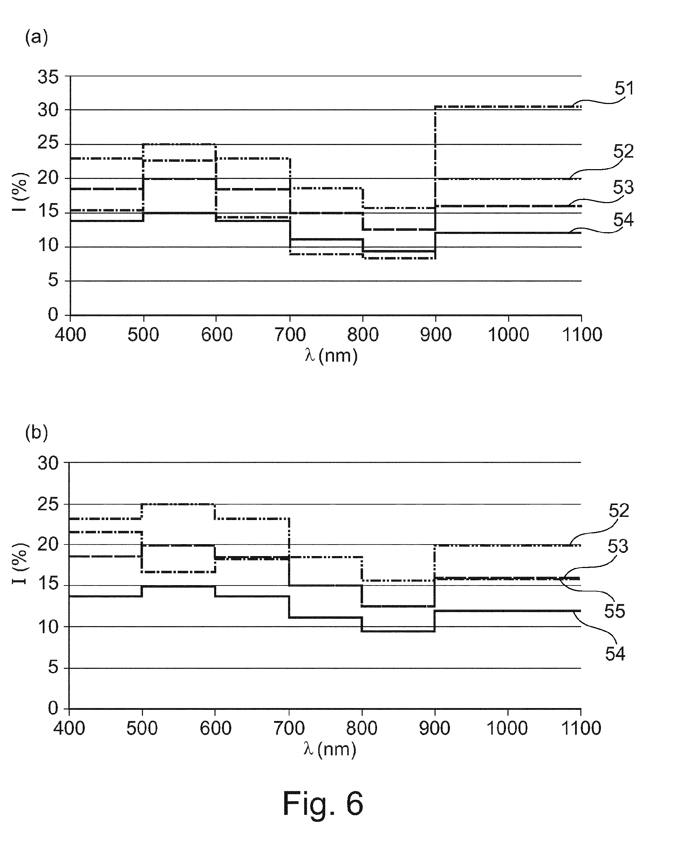

Fig. 6 shows an exemplary irradiance distribution extracted from EQE curves before (a) and after (b) applying the disclosure. The vertical axes indicate a percentage of total irradiance (I) in certain wavelength ranges (intervals), and the horizontal axes indicate said wavelength ranges ($\lambda$ in nanometer). As an example, the wavelength ranges include at least one of 440-485nm (peak at 465nm; blue), 440-485nm (peak at 632nm; red), 485-570nm (peak at 520nm; green), 750-810nm (peak at 780nm), 810-875nm (peak at 820 nm), and 875-975nm (peak at 940nm).

Fig. 6(a) shows an exemplary irradiance distribution extracted from an EQE curve before applying the disclosure. Curve 51 indicates an actual measurement performed. Curves 52 and 54 denote maximum and minimum thresholds allowed for class A of the IEC 60904-9 standard, respectively. Curve 53 indicates said IEC 60904-9 standard.

Fig. 6(b) shows an exemplary irradiance distribution extracted from EQE curves after applying the disclosure. Curve 55 indicates an actual measurement performed, for instance, using the system of Fig. 5. Curves 52 and 54 again denote maximum and minimum thresholds allowed for class A of the IEC 60904-9 standard, respectively. Curve 53 indicates said IEC 60904-9 standard.

As an example, a difference between the short circuit current Isc and a nominal short circuit current is 0.56A before applying the disclosure, and 0.003A after applying the disclosure. This clearly shows a significant improvement of the accuracy and reproducibility of the simulated solar spectrum obtainable by the present disclosure.

It is to be understood that determining an amount of irradiance in one or more of the wavelength ranges using quantum efficiency curves is a mere example, and that a variety of other approaches could be used for said determination.

In the following, an exemplary method according to embodiments of the present disclosure is described. It is to be understood that the method could be carried out by the system described above with reference to Fig 5. Moreover, the system described above with reference to Fig. 5 may be configured to perform the method as follows.

A method for calibrating a light source for simulating a spectrum of solar radiation may include: providing the light source to emit radiation including the two or more different wavelength ranges, wherein the two or more different wavelength ranges provide the output spectrum; detecting the output spectrum; determining, from the detected output spectrum, an amount of irradiance in the one or more of the wavelength ranges; and adjusting the one or more radiation emission parameters of the light source based on the determined amount of irradiance in the one or more of the wavelength ranges to amend the output spectrum. For example, the one or more radiation emission parameters of the light source may be amended to match the output spectrum to the spectrum of solar radiation. Thereby, the light source can be calibrated.

According to embodiments, determining an amount of irradiance in the one or more of the wavelength ranges may include: determining a quantum efficiency, particularly a quantum efficiency curve over the one or more of the wavelength ranges, of the detection element, which is a photovoltaic device; and extracting the amount of irradiance in the one or more of the wavelength ranges from the determined quantum efficiency.

According to embodiments, the method may include detecting a spatial uniformity of the output spectrum; and adjusting one or more radiation emission parameters to spatially homogenize the output spectrum.

According to embodiments, adjusting the one or more of the radiation emission parameters of the light source may include activating and/or de-activating individual light emitting elements of the light source.

According to embodiments, the method may include testing a photovoltaic device using the light source having the one or more adjusted radiation emission parameters.

According to the embodiments of the present disclosure, a spectral match of the simulated solar spectrum emitted from the light source to the actual solar spectrum can be achieved. Thereby, simulation accuracy and reproducibility of said simulated solar spectrum is improved.

While the foregoing is directed to embodiments of the disclosure, other and further embodiments of the disclosure may be devised without departing from the basic scope thereof, and the scope thereof is determined by the claims that follow.

**Claims**

1. A system (60) for calibrating a light source (11) for simulating a spectrum of solar radiation, comprising:

   the light source (11) configured to emit radiation (12) including two or more different wavelength ranges to provide an output spectrum;
   a detection element (61) disposed opposite to the light source (11) and configured to detect the output spectrum, wherein said detection element (61) is a photovoltaic device;
   an evaluation module (62) connected to the detection element (61) and configured to determine, from the detected output spectrum, an amount of irradiance in one or more of the wavelength ranges; and
   a light source controller (13) connected to the evaluation module (62) and configured to adjust one or more radiation emission parameters of the light source (11) based on the determined amount of irradiance in the one or more of the wavelength ranges to amend the output spectrum.

2. The system of claim 1, wherein the light source (11) includes a radiation plate divided into a plurality of cells, and each of the cells includes a plurality of light-emitting elements, one or more of them emitting different wavelengths.

3. The system of claim 1 or 2, wherein the light source (11) is configured to produce an output spectrum with tunable wavelengths.

4. The system of one of claims 1 to 3, wherein the two or more different wavelength ranges are selected over the emission spectrum of solar radiation.

5. The system of one of claims 1 to 4, wherein the two or more wavelength ranges are selected from the group including blue, green, yellow, red, ultraviolet and infrared wavelength ranges.

6. The system of one of claims 1 to 5, further including one or more optical lenses disposed between the light source (11) and the detection element (61).

7. The system of one of claims 1 to 6, wherein the detection element (61) includes more than one photovoltaic device to detect the output spectrum, with the photovoltaic devices preferably being micro cells, in particular MWT micro cells.

8. The system of one of claims 1 to 7, wherein the evaluation module (62) is configured to determine an amount of irradiance in the one or more of the wavelength ranges based on a quantum efficiency of the detection element (61).

9. The system of one of claims 1 to 8, wherein the detection element (61) has further spatial resolution capabilities to detect a spatial uniformity of the output spectrum.

10. The system of claim 9, wherein the light source controller (13) is further configured to adjust one or more radiation emission parameters of the light source (11) to spatially homogenize the output spectrum.

11. A method for calibrating a light source for simulating a spectrum of solar radiation, comprising:

    operating a light source (11) to emit radiation including two or more different wavelength ranges, wherein the two or more different wavelength ranges provide an output spectrum;
    detecting the output spectrum by use of a detection element (61) that is a photovoltaic device;
    determining, from the detected output spectrum, an amount of irradiance in one or more of the wavelength ranges; and
    adjusting one or more radiation emission parameters of the light source (11) based on the determined amount of irradiance in the one or more of the wavelength ranges to amend the output spectrum.

12. The method of claim 11, wherein determining the amount of irradiance in the one or more of the wavelength ranges includes:

determining a quantum efficiency of the detection element (61) used to detect the output spectrum; and extracting the amount of irradiance in the one or more of the wavelength ranges from the determined quantum efficiency.

13. The method of claim 11 or 12, further including:

detecting a spatial uniformity of the output spectrum; and
adjusting one or more radiation emission parameters to spatially homogenize the output spectrum.

14. The method of one of claims 11 to 13, wherein adjusting the one or more radiation emission parameters of the light source (11) includes: activating and/or de-activating individual light emitting elements of the light source (11).

15. The method of one of claims 11 to 14, further including:

testing a photovoltaic device using the light source (11) having the adjusted one or more radiation emission parameters.

Fig. 1

Fig. 2

Fig. 3

Fig. 4

Fig. 5

(a)

(b)

Fig. 6

Europäisches
Patentamt

European
Patent Office

Office européen
des brevets

# EUROPEAN SEARCH REPORT

Application Number

EP 13 17 6337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/241549 A1 (WOOTTON GERALD R [CA]) 6 October 2011 (2011-10-06) * paragraphs [0019] - [0023], [0044] - [0048]; figures 1-3 * | 1-15 | INV. G01J1/08 F21V29/00 G01R31/26 |
| X | WO 2010/057935 A1 (UNIV DENMARK TECH DTU [DK]; KREBS FREDERIK CHRISTIAN [DK]) 27 May 2010 (2010-05-27) * pages 10-15; figures 2,3 * | 1-15 | |
| X | US 2010/276571 A1 (WANG DAPENG [US] ET AL) 4 November 2010 (2010-11-04) * paragraphs [0037], [0172], [0257] - [0261]; figures 19a,19c,29a,29b, * | 1-15 | |
| | | | TECHNICAL FIELDS SEARCHED (IPC) |
| | | | G01J F21V G01R |

The present search report has been drawn up for all claims

| Place of search | Date of completion of the search | Examiner |
|---|---|---|
| Munich | 6 September 2013 | Hambach, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 17 6337

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2013

| Patent document cited in search report | | Publication date | Patent family member(s) | | Publication date |
|---|---|---|---|---|---|
| US 2011241549 | A1 | 06-10-2011 | CA | 2794766 A1 | 06-10-2011 |
| | | | CN | 102918930 A | 06-02-2013 |
| | | | EP | 2554025 A1 | 06-02-2013 |
| | | | TW | 201214505 A | 01-04-2012 |
| | | | US | 2011241549 A1 | 06-10-2011 |
| | | | WO | 2011120172 A1 | 06-10-2011 |
| WO 2010057935 | A1 | 27-05-2010 | EP | 2356477 A1 | 17-08-2011 |
| | | | US | 2011267090 A1 | 03-11-2011 |
| | | | WO | 2010057935 A1 | 27-05-2010 |
| US 2010276571 | A1 | 04-11-2010 | TW | 201043988 A | 16-12-2010 |
| | | | US | 2010276571 A1 | 04-11-2010 |
| | | | WO | 2010129559 A2 | 11-11-2010 |

EPO FORM P0459

For more details about this annex : see Official Journal of the European Patent Office, No. 12/82